# EUROPÄISCHE PATENTSCHRIFT

(11) **EP 2 211 119 B1**
(45) Veröffentlichungstag und Bekanntmachung des Hinweises auf die Patenterteilung: **11.01.2017**
(21) Anmeldenummer: 09014723.2
(22) Anmeldetag: 26.11.2009
(51) Int. Cl.: F24D 3/16, F24F 5/00, F24F 13/24, E04B 9/00, E04B 9/02, E04F 13/08

(54) **Decken- oder Wandwärmetauscherelement**
Ceiling or wall heating element
Elément d'échangeur thermique plafonnier ou mural

(30) Priorität: 21.01.2009 DE 202009000717 U
(43) Veröffentlichungstag der Anmeldung: 28.07.2010
(73) Patentinhaber: Thermolution GmbH, 72184 Eutingen im Gäu (DE)
(72) Erfinder: Ferl, Jörg, 72184 Eutingen im Gäu (DE)
(74) Vertreter: Späth, Dieter

(56) Entgegenhaltungen:
- EP-A1- 1 489 241
- WO-A1-03/064931
- DE-A1- 10 346 503
- DE-U1- 9 316 791
- FR-A- 1 073 632
- FR-A- 1 107 119
- US-A- 3 043 567

## Beschreibung

Die Erfindung betrifft ein Decken- oder Wandwärmetauscherelement, das auf einer Sichtseite ein flächiges luftdurchlässiges Verkleidungselement aufweist, welches mindestens ein Wärmeleitprofil abdeckt, das sich in thermisch leitendem Kontakt mit einem Wärmetauscherrohr befindet, das zur Durchleitung eines Kühl- oder Heizmediums vorgesehen ist. Unter Sichtseite wird in diesem Zusammenhang diejenige Seite des Wärmetauscherelements verstanden, die bei an einer Decke bzw. an einer Wand befestigtem Wärmetauscherelement dieser abgewandt ist.

Zur Kühlung und/oder Heizung (Temperierung) von Räumen sind Wand- oder Deckeneinrichtungen in mannigfaltigen Ausführungsformen allgemein bekannt. Dabei erfolgt die Temperierung des Raumes in zunehmendem Maße über abgehängte Decken, die geschlossene oder luftdurchlässige Deckenelemente aus Putz, Gipskarton oder Metall oder anderen geeigneten Materialien aufweisen, über denen ein oder mehrere mit Wärmetauscherrohren verbundene Wärmeleitprofile angeordnet sind. Solche abgehängte Deckenelemente werden als Kühl-/Heizdecken bezeichnet, technisch gesehen sind sie Wärmetauscher, die Wärme (thermische Energie) zwischen einem Raum und dem Kühl- oder Heizmedium übertragen. Durch die Wärmetauscherrohre wird ein Kühl- oder Heizmedium geleitet, wobei ein Wärmeaustausch zwischen den Wärmetauscherrohren und den Wärmeleitprofilen über einen guten thermischen Kontakt erfolgt.

Im allgemeinen ist eine solche Kühl-/Heizdecke aus einer Anzahl von Wärmetauscherelementen zusammengesetzt, die die Wärmeleitprofile, die mit diesen thermisch leitend verbundenen Wärmetauscherrohre sowie Verkleidungselemente für die Sichtseite umfassen. Aus akustischen Gründen weisen die Verkleidungselemente üblicherweise Öffnungen auf. Diese Akustiköffnungen sind in der Regel auf der dem Wärmeleitprofil zugewandten Seite der Verkieidungselemente durch ein Akustikvlies oder eine Akustikmatte aus einem geeigneten Dämmmaterial abgedeckt.

Eine derartige Kühldecke ist beispielsweise in der Gebrauchsmusterschrift DE 93 16 791 U1 beschrieben. Die darin vorgeschlagene Kühldecke zur Raumtemperierung weist ein von Kühlwasser durchströmtes Rohrsystem auf, das zwischen einer Decke des Gebäudes und einer Anzahl im Abstand zu dieser in einer Ebene angeordneten Deckenelementen angebracht ist. Das Rohrsystem ist über ein die Deckenelemente tragendes Halteglied in einer Einbaulage festgelegt. In der Einbaulage liegen Kühlrohre des Rohrsystems einerseits an den Deckenelementen an und werden andererseits von Akustikmatten vollflächig auf der zur Decke weisenden Seite übergriffen. Die Halteglieder zur Befestigung der Deckenelemente weisen dabei auf der der Decke zuwandten Seite der Kühlrohre eine Stützvorrichtung für die Akustikmatten auf, die eine Verlegeebene für die Akustikmatten bestimmen.

Bei dem genannten Stand der Technik ist ein Zwischendeckenhohlraum zwischen einer Unterseite der Akustikmatten und einer Oberseite der Deckenelemente in der Einbaulage gebildet, in dem sich die Kühlrohre erstrecken. Der Zwischendeckenhohlraum kann als Resonatorraum für akustische Schwingungen wirken, so dass die Deckenelemente trotz der vollflächig oberhalb des Rohrsystems verlegten Akustikmatten den Raumschall und von den Kühlrohren ausgehende Strömungsgeräusche nur bedingt dämpfen.

Die europäische Patentanmeldung EP 1 489 241 A1 offenbart eine schallabsorbierende Decken-Unterkonstruktion mit plattenförmigen Akustikelementen, die Abdeckbleche aufweisen, auf denen schallabsorbierende Schaumplatten angeordnet sind. Die Abdeckbleche stehen seitlich über die Schaumplatten über. Zur Befestigung sind Doppel-T-Träger an einer Decke befestigt, in deren unteres Querhaupt Magnetstreifen eingelassen sind, an denen die Akustikelemente mit den seitlich überstehenden Rändern ihrer Abdeckbleche befestigt werden. An den Doppel-T-Trägern, die an der Decke befestigt sind, können Heiz- und/oder Kühlrohre angebracht sein.

Das Patent US 3,043,567 offenbart eine schallabsorbierende Deckenverkleidung, bei der Querträger von Wand zu Wand unter einer Decke befestigt sind. Mit Klammern werden Heiz- und/oder Kühlrohre an den Querträgern befestigt. Verkleidungselemente werden mit L- oder T-Profilen an den Querträgern angebracht, die quer zu den Querträgern, d.h. in Längsrichtung der Deckenverkleidung, an Klammern eingeschnappt werden, die an den Querträgern befestigt sind.

Die internationale Patentanmeldung WO 03/064 931 A1 offenbart ein thermoaktives Wand- und Deckenelement mit einem ersten Kasten, der mit einem schallisolierenden Material gefüllt ist. Abgedeckt ist der erste Kasten mit einer Lamellenkonstruktion, deren Lamellen in das schallisolierende Material im Kasten ragen und auch den Kasten seitlich umschließen. Die Lamellenkonstruktion weist auch ein Heiz- und Kühlrohr auf. Als Boden weist der erste Kasten ein Lochblech auf. Auf dem ersten Kasten ist ein zweiter Kasten angeordnet, der mit einem Phasenwechselmaterial gefüllt ist. Mit einem keilförmigen Wärmekontaktkörper, der verschieblich zwischen den beiden Kästen angeordnet ist, können die beiden Kästen in wärmeleitenden Kontakt gebracht oder thermisch voneinander getrennt werden.

Ausgehend von diesem Stand der Technik liegt der Erfindung die Aufgabe zugrunde, ein Wärmetauscherelement zur Decken- oder Wandbefestigung vorzuschlagen, das bei reduziertem Einsatz von Akustikmattenmaterial einen hohen Wirkungsgrad bezüglich der Schalldämmung aufweist.

Diese Aufgabe wird erfindungsgemäß durch ein Decken- bzw. Wandwärmetauscherelement mit den Merkmalen des Anspruchs 1 gelöst. Weitere vorteilhafte Weiterbildungen der Erfindung ergeben sich aus den Unteransprüchen.

Bei dem erfindungsgemäßen Decken- oder Wandwärmetauscheretement ist das Wärmetauscherrohr zwischen zwei entlang dem Wärmeleitprofil verlaufenden Absorberstreifen aus Schalldämmmaterial angeordnet. Die Absorberstreifen befinden sich mit dem Wärmetauscherrohr in einer Ebene. Für die Absorberstreifen kann an sich jedes Material mit schalldämmenden Eigenschaften verwendet werden. Als besonders geeignet haben sich Zuschnitte aus Schalldämmplatten erwiesen. Absorberstreifen aus vorgefertigten Schalldämmplatten sind zum einen mit geringem Aufwand schnell und kostengünstig herstellbar und zum anderen einfach in der Befestigung an den Wärmetauscherrohren und/oder den Wärmeleitprofilen.

Das mindestens eine Wärmetauscherrohr des Decken- oder Wandwärmetauscherelements kann sich dabei auf der dem Verkleidungselement zugewandten Seite und/oder auf der von dem Verkleidungselement abgewandten Seite des Wärmeleitprofils erstrecken. Es kann alternativ auch in einer Ebene mit dem Wärmeleitprofil angeordnet sein. Des weiteren kann das Wärmetauscherrohr an das Wärmeleitprofil angeformt sein, insbesondere dann, wenn das Wärmeleitprofil beispielsweise im Strangpressverfahren kostengünstig aus Aluminiummaterial hergestellt ist. Es ist auch möglich, das Wärmetauscherrohr und das Wärmeleitprofil unabhängig voneinander herzustellen und anschließend derart miteinander zu verbinden, dass zumindest bereichsweise ein guter thermisch leitender Kontakt hergestellt ist. Es ist von Vorteil, für die Wärmetauscherrohre beispielsweise Kupfer- oder Kunststoffrohre zu verwenden, da diese auf einfache Weise mäanderförmig gebogen verlegt an den Wärmeleitprofilen festlegbar sind. Die Befestigung kann abhängig von dem Material des Wärmetauscherrohrs und des Wärmeleitprofils mit allen industrieüblichen Verbindungstechniken erfolgen, beispielsweise durch Anpressen, Klammern, Löten, Schweißen oder Verkleben.

Vorteil der Erfindung ist, dass die Wärmeübertragung zwischen dem Decken- oder Wandwärmetauscherelement und einem umgebenden Raum durch die Absorberstreifen praktisch nicht verringert wird und viel besser als bei einer Kühldecke ist, deren Oberseite vollflächig von schalldämmendem Absorbermaterial abgedeckt ist. Dennoch erreicht das erfindungsgemäße Decken- oder Wandwärmetauscherelement nahezu dieselbe Schalldämpfung wie eine Kühldecke, deren Oberseite vollflächig von Absorbermaterial abgedeckt ist. Die thermische Leistung (Strahlung und Konvektion) des erfindungsgemäßen Decken- oder Wandwärmetauscherelements bleibt trotz der Absorberstreifen erhalten, die eine gute Schalldämpfung bewirken.

In einer bevorzugten Ausführungsform der Erfindung weist das Schalldämmmaterial für die Absorberstreifen Dämpfungsfasern auf. Solche Dämpfungsfasern sind unter anderem in Fasermatten aus organischen oder anorganischen Faserstoffen enthalten. Als Ausgangsmaterial für die Absorberstreifen verwendete Fasermatten können ein- oder beidseitig eine Kaschierung, mit oder ohne Perforation aufweisen, die die Dämpfungsfasern schützt. Beispielhaft wird auf eine Schalldämmplatte verwiesen, die in der EP 0 652 333 B1 offenbart ist. Diese hat Mineralwolle als Grundlage, wobei deren eine Oberfläche bildende Kaschierung eine Perforation aufweist, die zwischen 7 und 20 Prozent der Oberfläche der Faserdämmplatte einnimmt.

Vorteilhafterweise sind die Wärmeleitprofile und die Absorberstreifen des Decken- bzw. Wandwärmetauscherelements in abwechselnder Reihenfolge an Längsseiten aneinander angrenzend, nebeneinander angeordnet. Sie werden vorzugsweise von dem Verkleidungselement gehalten. Dabei weisen die Absorberstreifen aus Schalldämmmaterial idealerweise eine solche Dicke auf, dass sie, auf dem Wärmeleitprofil aufliegend, die Wärmetauscherrohre in der Höhe zumindest geringfügig überragen.

Die seitlich der Wärmetauscherrohre und der Wärmeleitprofile mit diesen in einer Ebene angeordneten Absorberstreifen dämpfen zum einen Strömungsgeräusche des Kühl- oder Heizmediums deutlich, die von den Wärmetauscherrohren bzw. von den mit den Wärmetauscherrohren mechanisch verbundenen Wärmeleitprofilen an die Luft übertragen werden, und reduzieren zum anderen die Amplitude der von den Verkleidungselementen aufgenommenen und/oder weitergeleiteten Akustikschwingungen zuverlässig.

Die Absorberstreifen decken die Wärmeleitprofile und auch das Decken- oder Wandwärmetauscherelement nicht oder jedenfalls nicht vollflächig ab, so dass Raumluft mit den Wärmeleitprofilen in Kontakt kommt ohne die Absorberstreifen durchströmen zu müssen. Dadurch ist eine gute Wärmeübertragung zwischen dem umgebenden Raum, einem eventuellen Deckenzwischenraum zwischen dem Decken- oder Wandwärmetauscherelement und einer Raumdecke und den Wärmeleitprofilen gewährleistet. Das erfindungsgemäße Decken- und Wandwärmetauscherelement weist eine gute Wärme- und Kühlleistung auf, die von den Absorberstreifen unwesentlich gemindert wird. Trotzdem entspricht die Schallabsorption nahezu der einer vollflächigen Abdeckung der Wärmeleitprofile mit Akustikmatten.

Bei einer Variante des erfindungsgemäßen Decken- oder Wandwärmetauscherelements ist zwischen dem Verkleidungselement und den Wärmeleitprofilen ein Schallschutzvlies angeordnet. Das Schallschutzvlies verbessert die Schalldämmung. Es ist außerdem bis zu einem gewissen Grad luftdurchlässig und ermöglicht so den Durchtritt von Akustikwellen ohne großen Widerstand. Als Zwischenlage zwischen dem Verkleidungselement und den Wärmeleitprofilen des Decken- und Wandwärmetauscherelements entkoppelt es das Verkleidungselement und das Wärmeleitprofil mechanisch weitgehend voneinander und mindert so die Körperschallübertragung zwischen diesen.

Um die Ausbreitung von Geräuschen wirksam zu dämpfen, die von in dem Raum befindlichen Personen oder Einrichtungen ausgehen, dürfen die die Geräusche transportierenden Akustikwellen von dem Verkleidungselement so wenig wie möglich in den Raum zurückgeworfen werden. Um insbesondere bei Verkleidungselementen aus einem nur bedingt schallaufnehmenden Material, beispielsweise aus Putz, Gipskarton oder Metall, den Schallwellen den Durchtritt zu den Absorberstreifen zumindest teilweise zu ermöglichen, weist das Verkleidungselement vorteilhafterweise eine Perforation auf. Die die Perforation bildenden Durchbrüche in den Verkleidungselementen ermöglichen an diesen Stellen einen Luft- und damit Schalldurchtritt durch das Verkleidungselement. Auf diese Weise können die das Verkleidungselement passierenden Schallwellen zu den Absorberstreifen gelangen und in diese eindringen, so dass sie größtenteils von dem Schalldämmmaterial absorbiert werden. Des weiteren ermöglicht die Perforation eine Luftzirkulation durch das Verkleidungselement.

Bei einer bevorzugten Ausführungsform der Erfindung ist ein metallisches Verkleidungselement mit Perforationen vorgesehen, das insbesondere als Lochblech ausgeführt ist. Das Lochblech kann einfach an den Rändern abgekantet werden, so dass eine Kassette gebildet ist, die die Wärmeleitprofile und die Absorberstreifen seitlich umgreift, auf der zur Sichtseite gerichteten Unterseite abdeckt und an der der Sichtseite des Decken- oder Wandwärmetauscherelements gegenüberliegenden Befestigungsseite ein Stück weit an den Rändern übergreift. Die Wärmeleitprofile und die Absorberstreifen werden dabei von dem kassetteartig ausgebildeten Verkleidungselement in allen Richtungen lagestabil zueinander gehalten.

Bei einer anderen bevorzugten Ausführungsform des erfindungsgemäßen Decken- oder Wandwärmetauscherelements sind Wärmetauscherrohre uber an die Wärmeleitprofileangeformte Klammerstege zumindest bereichsweise formschlüssig aufgenommen. Dies erleichtert das Festlegen der Wärmetauscherrohre an der Wärmeleitprofilen und stellt einen auf Dauer sicheren thermisch leitenden Kontakt mit geringem Wärmeüberganswiderstand zwischen Wärmetauscherrohr und Wärmeleitprofil her. Die Klammerverbindung ermöglicht X einen einfachen Zusammenbau des Decken- oder Wandwärmetauscherelements.

In einer weiteren vorteilhaften Ausführungsform der Erfindung weisen die Wärmeleitprofile parallel zu den Klammerstegen verlaufende, in einem Abstand zu diesen angeordnete Haltestege für die Absorberstreifen auf. Die Haltestege sind vorzugsweise wie die Klammerstege an die Wärmeleitprofile angeformt und erstrecken sich beidseits der Halteklammer für das Wärmetauscherrohr. Die Haltestege wie auch die Klammerstege können jedoch auch als getrennte Teile ausgeführt und durch geeignete Maßnahmen an den Wärmeleitprofilen befestigt sein. Sie weisen außerdem einen Abstand zu den Längskanten des Wärmeleitprofils auf. Die nicht mit dem Wärmeleitprofil verbundenen freien Enden der Haltestege sind vorzugsweise L- oder T-förmig ausgebildet, wobei der zumindest eine Hinterschnitt des jeweiligen Haltesteges in Richtung der zugeordneten seitlichen Längskante des Wärmeleitprofils angeordnet ist.

Zwei nebeneinander mit Abstand zueinander angeordnete Wärmeleitprofile weisen demnach einen seitlichen Zwischenraum zur Aufnahme der Absorberstreifen auf, der seitlich von zueinander hin gerichteten U-förmig ausgebildeten Halterungen der Wärmeleitprofile für die Absorberstreifen begrenzt ist. In einen solchen Zwischenraum kann ein Absorberstreifen in Längsrichtung des Wärmeleitprofils, in der sich auch das Wärmetauscherrohr erstreckt, eingeschoben werden, wobei Längsseitenränder der Absorberstreifen in die Halterungen eingreifen. Die Absorberstreifen werden dabei von den Wärmeleitprofilen fixiert. Eine Alternative ist, die Absorberstreifen in einem Überlappungsbereich auf die Wärmeleitprofile zu kleben.

Vorzugsweise sind auf der dem Verkleidungselement gegenüberliegenden Seite der Wärmeleitprofile Befestigungsschienen zur Decken- oder Wandbefestigung des Decken- oder Wandwärmetauscherelements anordenbar, die beispielsweise als hinterschnittenes U-Profil ausgebildet sind und sich quer zu den Wärmeleitprofilen, den Wärmetauscherrohren und den Absorberstreifen erstrecken. Zweckmäßigerweise liegen die Befestigungsschienen auf den Haltestegen der Profilelemente auf und verhindern so ein Herausfallen der Absorberstreifen vor der Befestigung des Wärmetauscheretements an der Raumwand oder der Raumdecke.

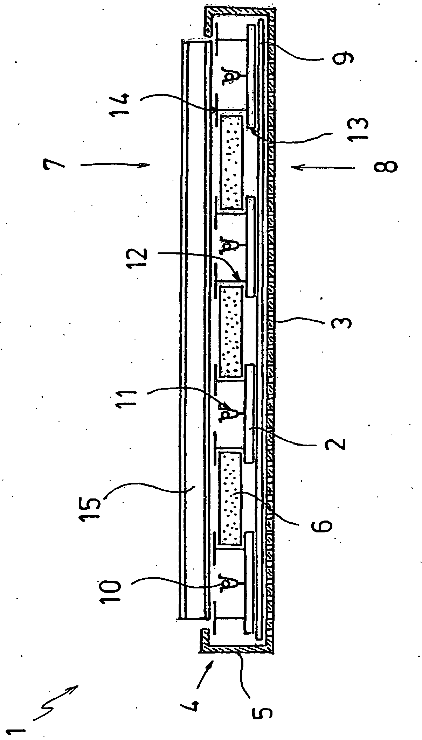

Nachfolgend wird die Erfindung anhand eines in der Zeichnung dargestellten Ausführungsbeispiels näher erläutert.

Die einzige Figur der Zeichnung zeigt ein Ausführungsbeispiel eines erfindungsgemäßes Decken- oder Wandwärmetauscherelement in einer schematischen Querschnittsdarstellung.

Das erfindungsgemäße Decken- oder Wandwärmetauscherelement 1 weist in dem dargestellten Ausführungsbeispiel vier Wärmeleitprofile 2 auf, die mit seitlichem Abstand zueinander auf einem luftdurchlässigen Verkleidungselement 3 angeordnet sind. Das Verkleidungselement 3 ist aus einem Lochblech hergestellt, und weist jeweils zwei 90 Grad Abkantungen 4 an seinen Rändern 5 auf, so dass die Ränder 5 die Wärmeleitprofile 2 um- und auf einer Ober- bzw. Rückseite des Decken- oder Wandwärmetauscherelements 1 etwas übergreifen. Das Verkleidungselement 3 ist somit kassettenförmig ausgebildet und nimmt neben den vier Wärmeleitprofilen 2 drei Absorberstreifen 6 auf, die sich in einer Ebene mit den Wärmeleitprofilen 2 befinden und sich parallel zu den Wärmeleitprofilen 2 über die Länge der Wärmeleitprofile 2 erstrecken. Die Absorberstreifen 6 sind aus Faserschalldämmmatten hergestellt. Sie sind zur Schalldämmung vorgesehen und absorbieren Schallwellen so gut wie eine Absorbermatte, die das Decken- oder Wandwärmetauscherelement 1 vollflächig abdeckt. Da die Wärmeleitprofile 2 auf einer Befestigungsseite 7, die einer Sichtseite 8 Decken- oder Wandwärmetauscherelements 1 abgewandt ist, nicht von den Absorberstreifen 6 abgedeckt sind, ist gegenüber einer vollflächigen Abdeckung der Wärmeleitprofile 2 mit einer Faserschalldämmplatte, wie sie aus dem Stand der Technik bekannt ist, eine Wärmeübertragung zwischen der Raumluft und den Wärmeleitprofilen 2 verbessert.

Zwischen den Wärmeleitprofilen 2 und dem Verkleidungselement 3 ist ein Schallschutzvlies 9 angeordnet, das auf das Verkleidungselement 3 aufgeklebt ist. Das Schallschutzvlies 9 ist mit den vorzugsweise als Aluminiumprofil ausgebildeten Wärmeleitprofilen 2 kontaktschlüssig verbunden. Die Absorberstreifen 6 beispielsweise aus Mineralwolle können eine in der Zeichnung nicht dargestellte ein- oder beidseitige Kaschierung aufweisen, die dem Schallschutzvlies 9 gegenüberliegend angeordnet ist. Die Kaschierung der Absorberstreifen 6 kann perforiert ausgeführt sein und ermöglicht so das Eindringen von Schallwellen in das Faserdämmmaterial, wobei das Schallschutzvlies 9 im hohen Maße schalldurchlässig ist.

Die Wärmeleitprofile 2 sind in gutem thermisch leitenden Kontakt mit Wärmetauscherrohren 10, die von an die Wärmeleitprofile 2 angeformten Klammerstegen 11 aufgenommen und an den Wärmeleitprofilen 2 festgelegt sind. Die Wärmetauscherrohre 10 der Wärmeleitprofile 2 eines Decken- oder Wandwärmetauscherelements 1 sind mäanderförmig verlegt oder durch U-Rohre an ihren Enden mäanderförmig für die Durchleitung eines Heiz- oder Kühlmittels verbunden. Die Wärmetauscherrohre 10 sind von den Klammerstegen 11 zumindest bereichsweise formschlüssig umgriffen. Eine andere Möglichkeit ist eine Registeranordnung, bei der die zueinander parallelen Wärmetauscherrohre 10 an beiden Enden in je ein Rohr münden, durch deren eines das Heiz- oder Kühlmittel zu- und durch deren anderes das Heiz- und Kühlmittel abgeführt wird.

Neben den Klammerstegen 11 weisen die Wärmeleitprofile 2 parallel zu den Klammerstegen 11 verlaufende Haltestege 12 für die Absorberstreifen 6 auf. Die Haltestege 12 sind in dem dargestellten Ausführungsbeispiel wie die Klammerstege 11 an die Wärmeleitprofile 2 angeformt. Sie weisen einen Abstand zu den Klammerstegen 11 sowie zu Längsrändern 13 der Wärmeleitprofile 2 auf. Die Haltestege 12 sind T-förmig und von den Längsrändern 13 der Wärmeleitprofile 2 nach innen versetzt, so dass sie U-förmige, zur Seite offene Halterungen entlang der Längsränder 13 der Wärmeleitprofile 2 zur Aufnahme von Längsrändern der Absorberstreifen 6 bilden.

Auf der dem Verkleidungselement 3 abgewandten Befestigungsseite 7 des Decken- oder Wandwärmetauscherelements 1 sind, abhängig von der Größe des Decken- oder Wandwärmetauscherelements 1, mindestens zwei Befestigungsschienen 15 zur Decken- oder Wandbefestigung anordenbar. Die Befestigungsschienen 15 sind als hinterschnittenes U-Profil ausgebildet und erstrecken sich quer zu den Wärmeleitprofilen 2 den Wärmetauscherrohren 10 und den Absorberstreifen 6. Sie liegen auf den Haltestegen 12 auf.

## Patentansprüche

1. Decken- oder Wandwärmetauscherelement (1), mit Wärmeleitprofilen (2) und Absorberstreifen (6) aus Schalldämmmaterial, die abwechselnd nebeneinander in einer Ebene angeordnet sind, wobei die Wärmeleitprofile (2) sich in thermisch leitendem Kontakt mit Wärmetauscherrohren (10) zur Durchleitung eines Kühl- oder Heizmediums befinden, die zwischen den Absorberstreifen (6) angeordnet sind, und mit einem flächigen luftdurchlässigen Verkleidungselement (3) auf einer Sichtseite (8) des Decken- und Wandwärmetauscherelements (1), welches die Wärmeleitprofile (2) und die Absorberstreifen (6) abdeckt, **dadurch gekennzeichnet, dass** die Wärmeleitprofile (2) und die Absorberstreifen (6) auf einer der Sichtseite (8) abgewandten Befestigungsseite (7) des Decken- und Wandwärmetauscherelements (1) frei liegen.

2. Decken- oder Wandwärmetauscherelement nach Anspruch 1, **dadurch gekennzeichnet, dass** das Schalldämmmaterial Dämpfungsfasern aufweist.

3. Decken- oder Wandwärmetauscherelement nach Anspruch 1 oder 2, **dadurch gekennzeichnet, dass** die Wärmeleitprofile (2) und die Absorberstreifen (6) abwechselnd an Längsseiten aneinander angrenzend nebeneinander angeordnet sind.

4. Decken- oder Wandwärmetauscherelement nach einem der vorangegangenen Ansprüche, **dadurch gekennzeichnet, dass** zwischen dem Verkleidungselement (3) und den Wärmeleitprofilen (2) ein Schallschutzvlies (9) angeordnet ist, das vorzugsweise mit dem Verkleidungselement (3) verklebt ist.

5. Decken- oder Wandwärmetauscherelement nach einem der vorangegangenen Ansprüche, **dadurch gekennzeichnet, dass** das Verkleidungselement (3) eine Perforation aufweist.

6. Decken- oder Wandwärmetauscherelement nach Anspruch 5, **dadurch gekennzeichnet, dass** das Verkleidungselement (3) ein Lochblech ist.

7. Decken- oder Wandwärmetauscherelement nach einem der vorangegangenen Ansprüche, **dadurch gekennzeichnet, dass** die Wärmetauscherrohre (10) über an die Wärmeleitprofil (2) angeformte Klammerstege (11) zumindest bereichsweise formschlüssig aufgenommen sind.

8. Decken- oder Wandwärmetauscherelement nach Anspruch 7, **dadurch gekennzeichnet, dass** die Wärmeleitprofile (2) parallel zu den Klammerstegen (11) verlaufende, in einem Abstand zu diesen angeordnete Haltestege (12) für die Absorberstreifen (6) aufweisen.

9. Decken- oder Wandwärmetauscherelement nach einem der vorangegangenen Ansprüche, **dadurch gekennzeichnet, dass** auf der dem Verkleidungselement (3) abgewandten Seite der Wärmeleitprofile (2), das heisst auf der Befestigungsseite (7) des Decken-oder wandweirmetanscherelements, Befestigungsschienen (15) anordenbar sind, die vorzugsweise als hinterschnittenes U-Profil ausgebildet sind und sich quer zu den Wärmeleitprofilen (2) und den Absorberstreifen (6) erstrecken.

## Claims

1. A ceiling or wall heat exchanger element (1) with thermally conductive profiles (2) and absorber strips (6) of sound-absorbing material, which are arranged alternately next to one another in a plane, wherein the thermally conductive profiles (2) are situated in thermally conductive contact with heat exchanger pipes (10) for conducting a cooling or heating medium, which are arranged between the absorber strips (6), and with a laminar, air permeable cover element (3) on a visible side (8) of the ceiling and wall heat exchanger element (1), which covers the thermally conductive profiles (2) and the absorber strips (6), **characterised in that** the thermally conductive profiles (2) and the absorber strips (6) are exposed on a fastening side (7), remote from the visible side (8), of the ceiling and wall heat exchanger element (1).

2. A ceiling or wall heat exchanger element as claimed in Claim 1, **characterised in that** the sound-absorbing material includes attenuating fibres.

3. A ceiling or wall heat exchanger element as claimed in Claim 1 or 2, **characterised in that** the thermally conductive profiles (2) and the absorber strips (6) are arranged alternately next to and adjoining one another at longitudinal sides.

4. A ceiling or wall heat exchanger element as claimed in one of the preceding claims, **characterised in that** arranged between the cover element (3) and the thermally conductive profiles (2) there is a sound insulating fleece (9), which is preferably secured by adhesive to the cover element (3).

5. A ceiling or wall heat exchanger element as claimed in one of the preceding claims, **characterised in that** the cover element (3) is perforated.

6. A cover or wall heat exchanger element as claimed in Claim 5, **characterised in that** the cover element (2) is an apertured plate.

7. A ceiling or wall heat exchanger element as claimed in one of the preceding claims, **characterised in that** the heat exchanger pipes (10) are accommodated, in a form-locking manner, at least in regions, by means of clip webs (11) integrally formed on the thermally conductive profiles (2).

8. A ceiling or wall heat exchanger element as claimed in Claim 7, **characterised in that** the thermally conductive profiles (2) include retaining webs (12) for the absorber strips (6), which extend parallel to the clip webs (11) and are arranged spaced from them.

9. A ceiling or wall heat exchanger element as claimed in one of the preceding claims, **characterised in that** fastening rails (15) are arrangeable on the side of the thermally conductive profiles (2) remote from the cover element (3), that is to say on the fastening side (7) of the ceiling or wall heat exchanger element, which fastening rails are preferably constructed in the form of an undercut U profile and extend transversely to the thermally conductive profiles (2) and the absorber strips (6).

## Revendications

1. Elément (1) d'échange thermique pour plafonds ou parois, comprenant des profilés (2) de conduction thermique et des bandes absorbantes (6) en un matériau d'isolation acoustique, agencées en juxtaposition alternée dans un plan, lesdits profilés (2) de conduction thermique étant en contact thermiquement conducteur avec des tubulures (10) d'échange de chaleur, affectées à la circulation d'un fluide de refroidissement ou de chauffage et interposées entre lesdites bandes absorbantes (6) ; et, sur un côté visible (8) dudit élément (1) d'échange thermique pour plafonds ou parois, un élément d'habillage (3) aplati et translucide, recouvrant lesdits profilés (2) de conduction thermique et lesdites bandes absorbantes (6), **caractérisé par le fait que** les profilés (2) de conduction thermique, et les bandes absorbantes (6) sont librement exposés sur un côté (7) de fixation dudit élément (1) d'échange thermique pour plafonds ou parois qui est tourné à l'opposé du côté visible (8).

2. Elément d'échange thermique pour plafonds ou parois, selon la revendication 1, **caractérisé par le fait que** le matériau d'isolation acoustique comporte des fibres d'insonorisation.

3. Elément d'échange thermique pour plafonds ou parois, selon la revendication 1 ou 2, **caractérisé par le fait que** les profilés (2) de conduction thermique et les bandes absorbantes (6) sont juxtaposés en alternance et sont limitrophes les uns des autres sur des côtés longitudinaux.

4. Elément d'échange thermique pour plafonds ou parois, selon l'une des revendications précédentes, **caractérisé par le fait qu'**un non-tissé insonorisant (9), interposé entre l'élément d'habillage (3) et les profilés (2) de conduction thermique, est de préférence solidarisé par collage avec ledit élément d'habillage (3).

5. Elément d'échange thermique pour plafonds ou parois, selon l'une des revendications précédentes, **caractérisé par le fait que** l'élément d'habillage (3) présente une perforation.

6. Elément d'échange thermique pour plafonds ou parois, selon la revendication 5, **caractérisé par le fait que** l'élément d'habillage (3) est une tôle perforée.

7. Elément d'échange thermique pour plafonds ou parois, selon l'une des revendications précédentes, **caractérisé par le fait que** les tubulures (10) d'échange de chaleur sont intégrées par complémentarité de formes, au moins par zones, par l'intermédiaire de crampons (11) faisant corps avec les profilés (2) de conduction thermique.

8. Elément d'échange thermique pour plafonds ou parois, selon la revendication 7, **caractérisé par le fait que** les profilés (2) de conduction thermique comportent des membrures de retenue (12) qui sont dédiées aux bandes absorbantes (6), s'étendent parallèlement aux crampons (11) et sont placées à distance de ces derniers.

9. Elément d'échange thermique pour plafonds ou parois, selon l'une des revendications précédentes, **caractérisé par le fait que** des rails de fixation (15), pouvant être implantés du côté des profilés (2) de conduction thermique qui est tourné à l'opposé de l'élément d'habillage (3), c'est-à-dire du côté (7) de fixation dudit élément d'échange thermique pour plafonds ou parois, sont de préférence réalisés en tant que profilé en U contre-dépouillé et s'étendent transversalement par rapport auxdits profilés (2) de conduction thermique, et aux bandes absorbantes (6).
